(19)

Europäisches
Patentamt
European
Patent Office
Office européen
des brevets

(11) **EP 4 431 177 A1**

(12) **EUROPEAN PATENT APPLICATION**

(43) Date of publication:
**18.09.2024  Bulletin 2024/38**

(21) Application number: **23161580.8**

(22) Date of filing: **13.03.2023**

(51) International Patent Classification (IPC):
**B01J 19/00** *(2006.01)*

(52) Cooperative Patent Classification (CPC):
(C-Sets available)
**B01J 19/0026; B01J 3/008; B01J 19/12;**
B01J 19/0066; B01J 19/2415; C08F 110/02;
C08F 2400/04                                   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
 • **VOIGT, Björn**
  **444 86 Stenungsund (SE)**
 • **ERIKSSON, Björn**
  **444 86 Stenungsund (SE)**

 • **PETTERSSON, Lars**
  **444 86 Stenungsund (SE)**
 • **YALALOV, Denis**
  **44486 Stenungsund (SE)**
 • **CARLSSON, Nils**
  **444 86 Stenungsund (SE)**
 • **LARSSON, Pernilla**
  **444 86 Stenungsund (SE)**
 • **NIELSEN, Sten**
  **444 86 Stenungsund (SE)**
 • **HERMANSSON, Simon**
  **444 86 Stenungsund (SE)**

(74) Representative: **Kador & Partner Part mbB**
**Corneliusstraße 15**
**80469 München (DE)**

(54) **PROCESS FOR REDUCING FOULING IN  HIGH PRESSURE POLYMERIZATION**

(57)    The present invention relates to a process for the reduction of reactor fouling in a high pressure polymerization reactor comprising a siloxane-bonded polymer layer adhered to at least one reactor wall, wherein the process comprises contacting the siloxane-bonded polymer layer with an alcohol in an amount of not more than 2 wt.-%, based on the total amount of the reactor feed. The alcohol may be selected from the group consisting of methanol, ethanol, n-propanol, iso-propanol, n-buta-nol, and iso-butanol, or a combination thereof. The siloxane-bonded polymer layer may comprise an ethylene copolymer. The above process improves heat transfer at the reactor walls by reducing or removing said siloxane-bonded polymer layer and reducing fouling phenomena. This in turn improves product output, process control, product quality and reproducibility of the obtained polymers, and decreases downtime of the reactor.

EP 4 431 177 A1

(52) Cooperative Patent Classification (CPC): (Cont.)

C-Sets
**C08F 110/02, C08F 2/002;**
C08F 110/02, C08F 2500/12

**Description**

The present invention relates to a process for reducing fouling in high pressure polymerization, and more particularly to a process for the reduction of reactor fouling in a high pressure polymerization reactor comprising a siloxane-group-bonded polymer layer adhered to at least one reactor wall formed during the polymerization of ethylene (co)polymers.

**Background of the Invention**

Synthesis of ethylene homopolymers and copolymers (referred to below as ethylene (co) polymers)) by high pressure polymerization is well known in the art. Generally, the polymerization of the monomer(s) is carried out at a temperature of about 100-300 °C and at a pressure of about 100-300 MPa in a polymerization reactor. In a typical radical initiated process, this is done in the presence of a radical initiator. Usually the polymerization is carried out continuously, preferably in a tubular reactor or a stirred tank reactor.

During polymerization, fouling of the reactor may occur, especially when copolymerizing ethylene with polar comonomers and/or during formation of high molecular weight polymer. The fouling typically manifests itself as poor heat transfer, unstable and inhomogeneous production, with formation of gels and potential buildup of polymer deposits on the inner surfaces of the reactor over time. This may make it difficult to produce a polymer with a consistent and reproducible quality.

Reactor fouling may be particularly pronounced after synthesis of copolymers of ethylene and certain comonomers which may interact with or even bond to the reactor inner surfaces such as silanes capable of forming covalent siloxane bonds to the metal. Utilization of such silanes as comonomers for cross-linking are described in e.g. EP 3 234 953 A1 or EP 3 234 953 A1. For such cases even low comonomer content may cause or aggravate fouling issues as the bonded silane monomers then act as anchor points of polymer chains which in turn may entangle in other polymer chains. This increases the retention time of polymer flowing near the reactor walls, which induces fouling and lowers product output. This is especially true for subsequent polymerization in the absence of silanes where no rejuvenation of existing siloxane bonds may occur.

It has been suggested to solve the problem of reactor fouling in different ways, e.g. by periodic reactor scraping, addition of additives such as adhesion inhibitors, e.g. KR 100779308 B1 or even by installing ultrasonic transducers along the reactor (CN 114602392 A).

According to WO 99/25742 A1, it is proposed to mitigate the fouling formed during polymerization by introducing into the reactor an adhesion reducing silicon-containing compound such as hexadecyl trimethoxy silane. Such a compound will typically not cause fouling in subsequent silane free production periods. In spite of forming bonds to the reactor surface the size of these silane compounds is typically too small to entangle other polymers and cause fouling. However, such compounds are not consumed during polymerization and may linger in the reactor and recycle systems for a long time potentially affecting quality and operation of the plant.

Although the solutions proposed by the prior art may alleviate the fouling problems to some degree, so far no effective solution has been disclosed in high pressure polymerization reactors where ethylene with silane-containing (co)monomers are used. Thus, there is a strong need for an effective solution to the reactor fouling problem in the polymerization of a wide variety of different target ethylene (co)polymers. Such a solution would provide an important advantage both from a technical and economical point of view.

**Summary of the Invention**

Surprisingly, a solution to the above problems has been found by a novel process of reducing fouling in high pressure polymerization. Thus, the present invention provides a process for the reduction of reactor fouling in a high pressure polymerization reactor comprising a siloxane-bonded polymer layer adhered to at least one reactor wall,

wherein the process comprises contacting the siloxane-bonded polymer layer with an alcohol in an amount of not more than 2 wt.-%, based on the total amount of the reactor feed,

the alcohol being selected from the group consisting of methanol, ethanol, n-propanol, iso-propanol, n-butanol, iso-butanol, or a combination thereof.

Preferably, the siloxane-bonded polymer layer comprises an ethylene copolymer comprising a silane group containing comonomer unit so that siloxane may covalently bond to a steel surface of a reactor wall to form said siloxane-bonded polymer layer.

It has been found that the process of the present invention effectively improves heat transfer at the reactor walls by reducing or removing said siloxane-bonded polymer layer and reducing fouling phenomena. This in turn improves product output, process control, product quality and reproducibility.

## Detailed Description of the Invention

It has surprisingly been found that the addition in the contacting step of the present invention of an alcohol in an amount of not more than 2 wt.-%, based on the total amount of the reactor feed can effectively break the siloxane bonds within the siloxane-bonded polymer layer and to the surface of a reactor wall so that the effects of the invention can be obtained.

It is a particular benefit of the present invention that after producing a siloxane-bonded polymer layer adhering to the surface of a reactor wall by polymerization of e.g. a silane group-containing comonomer, the above contacting step with said alcohol can remove or at least substantially decrease said siloxane-bonded polymer layer at the surface(s) of a reactor wall. This gives particular freedom in subsequent polymerizations, where a grade in the absence of silane group-containing monomers (e.g. ethylene homopolymers) is desired. After removal or reduction of the said siloxane-bonded polymer layer at the surface(s) of a reactor wall heat transfer is substantially improved.

Preferably, the contacting step is conducted during polymerization in a high pressure polymerization reactor, wherein the alcohol is injected into the process either upstream the reactor, e.g. in the compression step, directly into the reactor, or downstream the reactor e.g. in the separation or recycle system Thus, there is no need for a separate washing step of removing the siloxane-bonded polymer layer from the reactor walls before re-starting polymerization or change of polymerization conditions. In turn, down-time of the reactor can be decreased.

Preferably, the alcohol is added in the contacting step in an amount of from 0.01-2 wt.-%, more preferably in an amount of from 0.1-1.5 wt.-%, based on the reactor feed. "Reactorfeed" means the total flow of monomer (e.g. ethylene), and/or conomomers and/or chain transfer agents and potentially other process chemicals delivered to the reactor at one or more positions via compressors and pumps.

It is especially preferred to use a primary alcohol such as methanol, ethanol, n-propanol etc. as the alcohol. Primary alcohols (acting as nucleophiles) are more reactive in attacking a silane atom than secondary and tertiary alcohols, since these are less sterically hindered.

Preferably, the alcohol is in a supercritical state. It is known that siloxane bonds (Si-O-Si) can be selectively modified to alkoxide groups (-OR) or hydroxyl groups (-OH) by an alcohol in its supercritical state (reference: CN 110655678 A). A supercritical state is defined at conditions, where the alcohol forms a supercritical fluid. The supercritical state is determined selectively by temperature and pressure, which differ for each specific alcohol and can be determined based on known phase diagrams. For example, methanol is in its supercritical state at a temperature above 240 °C and a pressure above 8.0 MPa, whereas n-propanol is in its supercritical state at a temperature above 264 °C and a pressure above 5.1 MPa.

Preferably, the contacting step is conducted at a temperature in the range of from 130 to 320 °C, more preferably in the range of from 140-310 °C, even more preferably in the range of from 150-300 °C.

The contacting step is preferably conducted at a pressure in the range of from 100 to 350. MPa, more preferably in the range of from 200-320 MPa, even more preferably in the range of from 220-300 MPa.

Any of the above temperature range can be combined with any of the above pressure range.

In the process according to the present invention the siloxane-bonded polymer layer preferably comprises an ethylene copolymer. Alternatively, the siloxane-bonded polymer layer may consist of an ethylene copolymer, preferably comprising an alpha-olefin comonomer having from 3 to 12 carbon atoms.

More preferably, the alpha-olefin comonomer is selected from the group consisting of propylene, 1-butene, 1-hexene and 1-octene.

Preferably, the content of the ethylene monomer in the ethylene copolymer may be between 60 and 99.5 wt.-%, more preferably between 70 and 99.5 wt.-%, even more preferably between 80 and 99 wt.-% of the ethylene copolymer. The content of the ethylene monomer in the final ethylene copolymer may also be in the range of from 95.0 to 99.9 wt.-%.

The ethylene copolymer may preferably comprise a silane group containing comonomer unit represented by the formula:

$$R^1 SiR^2{}_q Y_{3-q} \qquad (I)$$

wherein $R^1$ is an ethylenically unsaturated hydrocarbyl, hydrocarbyloxy or (meth)acryloxy hydrocarbyl group,

$R^2$ is an aliphatic saturated hydrocarbyl group,

Y which may be the same or different, is a hydrolysable organic group and

q is 0, 1 or 2.

$R^1$ may preferably be selected from the group consisting of vinyl, allyl, isopropenyl, butenyl, cyclohexanyl or gamma-(meth)acryloxy propyl; Y may preferably be selected from the group consisting of methoxy, ethoxy, formyloxy, acetoxy, propionyloxy or an alkyl- or arylamino group; and $R^2$, if present, may preferably be selected from the group consisting of a methyl, ethyl, propyl, decyl or phenyl group.

The silane group containing comonomer unit may preferably be selected from the group consisting of vinyl trimethoxy silane, vinyl triethoxysilane, gamma- (meth) acryloxypropyltrimethoxysilane and gamma- (meth)acryloxypropyltriethoxysilane.

Preferably, the silane group containing comonomer units are present in an amount between 0.2 and 4 wt.-% and more preferably between 0.5 to 2.5 wt.-% of the ethylene copolymer.

The ethylene copolymer may further comprise comonomer units comprising a polar group other than a silane group.

The comonomer units comprising a polar group may preferably be selected from the groups consisting of acrylic acids, methacrylic acids, acrylates, methacrylates, and vinyl esters.

Preferably, the comonomer units comprising a polar group are selected from the group consisting of vinyl carboxylate esters, such as vinyl acetate and vinyl pivalate, (meth)acrylates, such as methyl(meth)acrylate, ethyl(meth)acrylate, butyl(meth)acrylate and hydroxyethyl(meth)acrylate, olefinically unsaturated carboxylic acids, such as (meth)acrylic acid, maleic acid and fumaric acid, (meth)acrylic acid derivatives, such as (meth)acrylonitrile and (meth)acrylic amide, and vinyl ethers, such as vinyl methyl ether and vinyl phenyl ether.

Amongst these comonomer units, vinyl esters of monocarboxylic acids having 1 to 4 carbon atoms, such as vinyl acetate, and (meth)acrylates of alcohols having 1 to 4 carbon atoms, such as methyl (meth)acrylate, are particularly preferred. The term "(meth) acrylic acid" is intended here to embrace both acrylic acid and methacrylic acid.

Especially preferred comonomer units are butyl acrylate, ethyl acrylate and methyl acrylate. Two or more such olefinically unsaturated compounds may be used in combination.

Preferably, the content of the comonomer units comprising a polar group in the ethylene copolymer may be between 1 and 40 wt.-%, more preferably between 2 and 20 wt.-%, even more preferably between 4 and 10 wt.-% of the polyolefin.

According to preferred embodiments a silane-group containing copolymer may comprise a terpolymer. The term terpolymer means a polymer which comprises three different types of monomers or comonomers, preferably which consists of the three different monomers or comonomers. These monomers or comonomers may be selected from one or more of those mentioned above.

Preferably the ethylene copolymer has a $MFR_{2.16}$, (190 °C, 2.16 kg, ISO 1133), between 0.1 to 30 g/10min, more preferably between 0.1 and 10 g/10min, even more preferably between 0.2 and 5 g/10min or between 0.3 and 3 g/10min.

The ethylene copolymer compositions prepared according to the present invention may be crosslinkable and may therefore further comprise a crosslinking agent such as an organic peroxide.

The high-pressure polymerization reactor can be chosen from conventional types such as tubular or stirred autoclave reactors or combinations thereof. The monomers to be copolymerized are preferably introduced into the polymerization reactor with at least one free-radical copolymerization initiator, according to known copolymerization techniques. Typical copolymerization initiators which can be used include peroxide compounds such as lauryl peroxide, tert-butyl peracetate, tert-butyl peroxypivalate, di-tert-butyl peroxide, di(sec-butyl) peroxydicarbonate, as well as tert-butyl peroctoate. Other free radical initiators which can be used include azo bis compounds such as, e.g., azobisisobutyronitrile. The choice of initiator will depend on the polymerization temperature since each initiator has its own decomposition temperature, at which it efficiently generates free radicals. In general, the initiator is introduced in amounts from about 0-01 - 1 kg per produced ton of polymer. The copolymerization temperature is preferably maintained at about from 120 °C to 320 °C, and more preferably about from 140 °C to 300 °C. The pressure is preferably maintained at about from 130 to 350 MPa, and more preferably within the range of about from 250 to 300 MPa.

Heat transfer

Heat transfer coefficient is calculated as the heat flux across the reactor wall by dividing the heat absorbed by the reactor coolant by the logarithmic mean temperature difference between the reactor coolant and the reaction mixture inside the tubular reactor. Typical unit for this coefficient is $W/(m^2 \cdot K)$

Fouling manifests itself by low values of the heat transfer coefficient and defouling consequently, is seen as an increase in the heat transfer coefficients. Depending on the configuration (sectioning) and instrumentation of the reactor and coolant circuits a number of individual heat transfer coefficients can be calculated along the reactor. Injection of alcohol typically leads to an accelerated defouling in several parts of the reactor.

**Test methods**

Unless otherwise stated in the description or claims, the following methods were used to measure the properties defined generally above and in the claims and in the examples below. The samples were prepared according to given standards, unless otherwise stated.

**(a) Melt flow rate**

The melt flow rate (MFR) was determined according to ISO 1133. The MFR is measured with a load of 21.6 Kg at 190 °C and /or with a load of 2.16 Kg at 190 °C.

**(b) Density**

Density was determined according to ISO 1183A on a pressed plaque.

**(c) Comonomer content**

*Polar comonomer content (wt.-% and mol-%)*

Comonomer content (wt.-%) of the polar comonomer was determined in a known manner, based on Fourier transform infrared spectroscopy (FTIR) determination, calibrated with 13C-NMR as described in Haslam J, Willis HA, Squirrel DC. Identification and analysis of plastics, 2nd ed. London Iliffe books; 1972. The FTIR instrument used was a Bruker Tensor 27, 2 scan, resolution 4 cm$^{-1}$.
For the determination of the comonomers, films with defined thickness were prepared. The peaks for the used comonomers were compared to the peak of polyethylene (e.g. the peak for butyl acrylate at 3450 cm$^{-1}$ was compared to the peak of polyethylene at 2020 cm$^{-1}$ and the peak for silane at 945 cm$^{-1}$ was compared to the peak of polyethylene at 2665 cm$^{-1}$.). The weight % is converted to mol % by calculation based on the total moles of polymerizable monomers. The calibration with $^{13}$C-NMR was effected in a conventional manner which is well documented in the literature.

*Butyl Acrylate Content*

*The content of hydrolysable silane group(s)*

The amount of hydrolysable silane group(s) (Si(Y)$_{3-q}$) was determined using X-ray fluorescence analysis (XRF): The pellet sample was pressed to a 3 mm thick plaque (150°C for 2 minutes, under pressure of 5 bar and cooled to room temperature). Si-atom content was analysed by wavelength dispersive XRF (AXS S4 Pioneer Sequential X-ray Spectrometer supplied by Bruker).
Generally, in the XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis may be performed. The quantitative methods are calibrated with compounds with known concentrations of the element of interest_e.g. prepared in a Brabender compounder.
The XRF results show the total content (wt.-%) of Si and are then calculated and expressed herein as mol content of hydrolysable silane group(s) (Si(Y)$_{3-q}$)/kg polymer according to the following formula:

$$W_{silane}/M_{silane}/ \; (W_{silane}/M_{silane} + W_{etylene}/M_{ethylene} + W_{comonomer}\text{-}1/M_{comonomer\text{-}1} + W_{comonomer\text{-}n}/M_{comonomer\text{-}n})$$

in which;

$W_{silane}$ = weight in gram of the hydrolysable silane group(s) (Si(Y)$_{3-q}$/kg polymer (a)
$M_{silane}$ = molecular weight the hydrolysable silane group(s) (Si(Y)$_{3-q}$
$W_{ethylene}$ = weight in gram of ethylene/kg polymer (a)

$$M_{ethylene} = \text{molecular weight of ethylene}$$

$$W_{comonomer-1} = \text{weight in gram of comonomer-1/kg polymer (a) if present}$$

$$M_{comonomer-1} = \text{molecular weight of comonomer-1 if present}$$

$$W_{comonomer-n} = \text{weight in gram of comonomer-n/kg polymer (a) if present}$$

$$M_{comonomer-n} = \text{molecular weight of comonomer-1 if present.}$$

**Examples**

The present invention will now be described in more detail by reference to the following inventive examples.

**Example 1**

After the production of a silane-containing copolymer rendering the reactor in a fouled state, an LDPE homopolymer with $MFR_2$= 0,7 g/10 min and a density of ~921 kg/m$^3$ was produced in the fouled tubular reactor. The peak reaction temperatures were in the range of 280-300 °C, the reactor pressure around 280 MPa and suitable feeds of chain transfer agents were used to obtain the desired polymer properties. Ca 50 kg/h of methanol was injected during a period of 25 hours during which the average heat transfer coefficients increased by ~ 29% (from 394 W/m$^2$.K to 510W/m$^2$.K). Since the methanol also acts as a chain transfer agent, the regular chain transfer agent was adjusted to maintain the MFR. The estimated amount of methanol was less than 2 wt.-% based on the total amount of the reactor feed during the injection period.

**Example 2**

After the production of a silane-containing copolymer rendering the reactor in a fouled state, LDPE homopolymer with $MFR_2$= 2 g/10 min and a density of ~921 kg/m$^3$ was produced in the fouled tubular reactor. The peak reaction temperatures were in the range of 280-300 °C, the reactor pressure around 280 MPa and suitable feeds of chain transfer agents were used to obtain the desired polymer properties. Ca 75 kg/h of methanol was injected during a period of 12 hours during which the average heat transfer coefficients increased by ~46% (from 368 W/m$^2$•K to 543 W/m$^2$•K). Since the methanol also acts as a chain transfer agent, the regular chain transfer agent was adjusted to maintain the MFR. The estimated amount of methanol was less than 2 wt.-% based on the total amount of the reactor feed during the injection period.

**Example 3**

After the production of a silane-containing copolymer rendering the reactor in a fouled state, LDPE homopolymer with $MFR_2$= 0.3 g/10 min and a density of ~921 kg/m$^3$ was produced in the fouled tubular reactor. The peak reaction temperatures were in the range of 280-300 °C, the reactor pressure around 280 MPa and suitable feeds of chain transfer agents were used to obtain the desired polymer properties. Ca 50 kg/h of methanol was injected during a period of 46 hours during which the average heat transfer coefficients increased by ~ 10% (from 451 W/m$^2$•K to 494 W/m$^2$•K). Since the methanol also acts as a chain transfer agent, the regular chain transfer agent was adjusted to maintain the MFR. The estimated amount of methanol was less than 2 wt.-% based on the total amount of the reactor feed during the injection period.

The above results show that the contacting step with an alcohol during the polymerization of an ethylene polymer could substantially decrease a siloxane-bonded polymer layer adhered to the reactor walls, which could be measured as an increase of average heat transfer coefficient.

**Claims**

1.  A process for the reduction of reactor fouling in a high pressure polymerization reactor comprising a siloxane-bonded polymer layer adhered to at least one reactor wall,

wherein the process comprises contacting the siloxane-bonded polymer layer with an alcohol in an amount of not more than 2 wt.-%, based on the total amount of the reactor feed,
the alcohol being selected from the group consisting of methanol, ethanol, n-propanol, iso-propanol, n-butanol, iso-butanol, or a combination thereof.

2. The process according to claim 1, wherein the alcohol is in supercritical state.

3. The process according to claim 1 or 2, wherein the contacting step is conducted at a temperature in the range of from 130 to 320 °C.

4. The process according to any one of claims 1 to 3, wherein the contacting step is conducted at a pressure in the range of from 100 to 350 MPa.

5. The process according to any one of the preceding claims, wherein the siloxane-bonded polymer layer comprises an ethylene copolymer.

6. The process according to claim 5, wherein the ethylene copolymer comprises an alpha-olefin comonomer having from 3 to 12 carbon atoms.

7. The process according to claim 5 or 6, wherein the ethylene copolymer comprises a silane group containing comonomer unit represented by the formula:

$$R^1SiR^2{}_qY_{3-q} \qquad (I)$$

wherein $R^1$ is an ethylenically unsaturated hydrocarbyl, hydrocarbyloxy or (meth)acryloxy hydrocarbyl group, $R^2$ is an aliphatic saturated hydrocarbyl group,
Y which may be the same or different, is a hydrolysable organic group and q is 0, 1 or 2.

8. The process according to claim 7, wherein $R^1$ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and $R^2$, if present, is a methyl, ethyl, propyl, decyl or phenyl group.

9. The process according to claim 7 or 8, wherein the silane group containing comonomer unit is selected from the group consisting of vinyl trimethoxy silane, vinyl triethoxysilane, gamma-(meth)acryloxypropyltrimethoxysilane and gamma-(meth)acryloxypropyltriethoxysilane.

10. The process according to any one of claims 5 to 9, wherein the ethylene copolymer further comprises comonomer units comprising a polar group other than a silane group.

11. The process according to any one of claims 5 to 10, wherein the ethylene copolymer has a crosslinked structure.

12. The process according to any one of the preceding claims, wherein siloxane covalently bonds to a steel surface of a reactor wall to form said siloxane-bonded polymer layer.

13. The process according to any one of the preceding claims, wherein the contacting of the siloxane-bonded polymer layer with the alcohol occurs during high-pressure polymerization.

Europäisches
Patentamt

European
Patent Office

Office européen
des brevets

# EUROPEAN SEARCH REPORT

Application Number

EP 23 16 1580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 181 599 A1 (BOREALIS AG [AT]) 21 June 2017 (2017-06-21) * paragraphs [0001], [31f.50], [0052] * * claims 1-20 * | 1-13 | INV. B01J19/00 |
| X | EP 0 460 936 A1 (DU PONT [US]) 11 December 1991 (1991-12-11) * claims 1-7 * | 1-13 | |
| T | CN 110 655 678 A (ANHUI CHUZHOU DEWEI NEW MAT CO LTD) 7 January 2020 (2020-01-07) * the whole document * | | |

TECHNICAL FIELDS
SEARCHED       (IPC)

B01J
C08F

The present search report has been drawn up for all claims

| Place of search | Date of completion of the search | Examiner |
|---|---|---|
| Munich | 22 August 2023 | Neumeier, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 1580

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | | Publication date | Patent family member(s) | | | Publication date |
|---|---|---|---|---|---|---|---|
| EP | 3181599 | A1 | 21-06-2017 | EP | 3181599 | A1 | 21-06-2017 |
| | | | | WO | 2017102293 | A1 | 22-06-2017 |
| EP | 0460936 | A1 | 11-12-1991 | CA | 2043920 | A1 | 07-12-1991 |
| | | | | DE | 69116741 | T2 | 19-09-1996 |
| | | | | EP | 0460936 | A1 | 11-12-1991 |
| | | | | ES | 2083525 | T3 | 16-04-1996 |
| | | | | JP | H04227910 | A | 18-08-1992 |
| | | | | JP | H07121968 | B2 | 25-12-1995 |
| | | | | US | 5028674 | A | 02-07-1991 |
| CN | 110655678 | A | 07-01-2020 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3234953 A1
- KR 100779308 B1
- CN 114602392 A
- WO 9925742 A1
- CN 110655678 A

**Non-patent literature cited in the description**

- **HASLAM J ; WILLIS HA ; SQUIRREL DC.** Identification and analysis of plastics. Iliffe books, 1972